# EUROPEAN PATENT SPECIFICATION

(11) **EP 1 622 847 B1**
(45) Date of publication and mention of the grant of the patent: **14.11.2007**
(21) Application number: 04711661.1
(22) Date of filing: 17.02.2004
(51) Int. Cl.: C04B 28/14

(54) **SCREED COMPRISING RECYCLED GLASS WASTE**
REZYKLIERTE GLASABFÄLLE ENTHALTENDER ESTRICH
REMPLISSAGE LEGER COMPRENANT DES DECHETS DE VERRE RECYCLES

(30) Priority: 14.05.2003 GB 0311071
(43) Date of publication of application: 08.02.2006
(73) Proprietor: Burnside 117 Limited, Burnside Chambers Kilmacolm PA13 4ET (GB)
(72) Inventor: CAMPBELL, Sean, J., Oxshott KT22 0NN (GB)
(74) Representative: Lock, Graham James
(86) International application number: PCT/GB2004/000628
(87) International publication number: WO 2004/101464

(56) References cited:
- DE-A- 4 342 407
- FR-A- 2 507 592
- GB-A- 1 434 295
- US-A- 3 303 147
- US-A1- 2002 121 326
- US-A1- 2003 041 783
- US-B1- 6 435 770
- CHEMICAL ABSTRACTS + INDEXES, AMERICAN CHEMICAL SOCIETY. COLUMBUS, US, 3 May 1993 (1993-05-03), XP000353385 ISSN: 0009-2258
- DATABASE WPI Section Ch, Week 200027 Derwent Publications Ltd., London, GB; Class L02, AN 2000-315857 XP002279145 & RU 2 130 910 C1 (PENZA ARCHITECTURE BUILDING INST) 27 May 1999 (1999-05-27)
- CHEMICAL ABSTRACTS + INDEXES, AMERICAN CHEMICAL SOCIETY. COLUMBUS, US, 19 March 1984 (1984-03-19), XP000182569 ISSN: 0009-2258

## Description

The present invention relates to a flowing screed, for example an anhydrite or alpha-hemihydrate calcium sulphate based flowing floor screed, a cementitious flowing floor screed or a blended cementitious flowing floor screed comprising recycled waste glass sand for the construction of floating, unbonded and bonded screeds. In addition the invention relates to a method for the production of screeds and a method of the remediation of recycled glass waste via the production of any of the above flowing screed types in either bagged format or through delivery to site in bulk.

Within the context of this specification the word "comprises" is taken to mean "includes, among other things". It is not intended to be construed as "consists of only".

A flowing screed is one which can be pumped or poured and comprises a mixture of cement/s, aggregate/ sand and water, calcium sulphate aggregate/ sand and water applied to a eg concrete slab, insulation board or over underfloor heating etc to give a smooth surface finish. Known screeds of this type are ISOCRETE GYVLON TM supplied by Isocrete, LAFARGE GYVLON and AGILIA SCREED supplied by Lafarge, RMC READY-SCREED SUPAFLO supplied by RMC and TARMAC TRUFLOW supplied by Tarmac.

An ever increasing volume of glass waste is resulting in considerable pressure on available land fill space. In view of this, considerable pressure is being exerted tc clean up environmental problems associated with the disposal of glass and one process that has been developed to reduce this pressure is a process involving the recycling of waste glass. In this recycling process the waste glass is generally subjected to crushing, washing, grading and sieving to provide a glass sand.

The process however suffers from the disadvantage that the residue glass sand must then be disposed of. At present this is achieved by incorporation into tarmac/ashphalt and roadfill sub-base materials. Clearly, other methods of disposal are desirable.

Cementitious compositions comprising calcium sulphate and glass as a pozzolan are known from US 2003/0041783. Such cementitious compositions require the presence of kaolin as an essential element and are typically used as mortors or concretes.

Calcium sulphate compositions are also known from US2002/0121326. Such compositions are characterised by their improved adhesion to plastic and metal surfaces due to the presence of (a) one or more water-redispersable polymer powders based on vinyl esters, vinyl aromatic olefino, 1,3-dienes or vinyl halide monomers and (b) one or more alkali metal and for alkaline earth metal salts of short chain fatty acids.

Cementitious compositions comprising gypsum, optical glass production waste in the form of a sand and also an aggregate and optical glass production waste in the form of a pozzolanic glass are known, in RU 2130910. These compositions are characterised by a high density.

Therefore, a need exists for a process for the remediation of recycled glass waste to produce a product which is environmentally stable. In addition there is a need for a new product comprising recycled glass waste which is environmentally stable.

The present invention addresses or reduces at least one of the problems set out above.

It has now been found that screed production is one possible method of remediation and encapsulation of the waste glass material within an inorganic matrix resulting in an non-contaminating stable product. Advantageously, the process eliminates the need for landfill disposal of the waste glass and reduces the need for mined or quarried natural materials to be used.

A first aspect of the invention provides the use of a composition comprising (i) 15% to 75% by weight of an aggregate of recycled glass waste or a recycled glass waste sand residue; and (ii) 15% to 65% of a calcium sulphate binder selected from at least one of an alpha hemihydrate plaster, a beta hemihydrate plaster, an anhydrate or a combination of two or more thereof; and 10% to 20% by weight of water based on the weight of the composition as a flowable screed.

Preferably an embodiment of the screed according to the invention is a flowing screed which preferably comprises recycled glass waste in the form of an aggregate A flowing screed comprises water in an amount that enables the screed to flow.

An embodiment of a screed according to the invention comprises a recycled glass waste or recycled glass waste sand residue. This provides the advantage that the glass being of a lower specific gravity than conventional sand floats more easily in the flowing floor screed suspension than conventional sands and or aggregates.

Preferably an embodiment of a screed according to the invention additionally comprises a powder binder or slurry preferably comprising at least one of Calcium Sulphate, Portland Cement, High Alumina Cement, Calcium Sulpho-Aluminate

Cement, Silica Fume, Limestone Powder, Pulverised Fuel Ash blast furnace slag or a combination of two or more thereof. More preferably the powder binder comprises Calcium Sulphate. Most preferably the powder binder comprises Calcium Sulphate combined with at least one of water, portland cement, High Alumina Cement, Calcium Sulpho-Aluminate Cement, Silica Fume, Limestone Powder, Pulverised Fuel Ash, blast furnace slag or a combination of two or more thereof. Preferably the Calcium Sulphate is combined with 10% to 90% by weight of at least one of water, portland cement, High Alumina Cement, Calcium Sulpho-Aluminate Cement, Silica Fume, Limestone Powder, Pulverised Fuel Ash, blast furnace slag or a combination of two or more thereof.

The screed comprises 15 to 65%, by weight of the powder binder or slurry.

The calcium sulphate is selected from at least one of alpha hemihydrate, beta hemihydrate, anhydrite or a combination of two or more thereof.

Preferably an embodiment of the screed comprises a cement selected from at least one or more of alpha hemihydrate, beta hemihydrate, anhydrite combined with one or more of Portland Cement, High Alumina Cement, Calcium Sulpho-Aluminate Cement or a combination of two or more thereof.

Preferably, an embodiment of a screed according to the present invention comprises a mixture of alpha hemihydrate, beta hemihydrate, anhydride, High Alumina Cement and Portland Cement.

Preferably, an alternative embodiment of a screed according to the present invention comprises a mixture of Calcium Sulpho-Aluminate Cement and Portland Cement in addition to one or more of alpha hemihydrate, beta hemihydrate and/or anhydrite.

Preferably an embodiment of a screed according to the present invention comprises a limestone powder filler.

Preferably an alternative embodiment of a screed according to the present invention comprises a pulverised fuel ash powder filler.

Preferably an alternative embodiment of a screed according to the present invention comprises a silica fume powder filler.

Preferably, an embodiment of a screed according to the invention comprises a retarder to retard the cement hydration or calcium sulphate set time thereby extending the pot-life of the flowing screed. Preferably the retarder comprises at least one of citric acid, tartaric acid, boric acid, sodium gluconate, Rochelle salt, tri-sodium citrate, sodium tri-polyphosphate, a chelating agent or a combination of two or more thereof.

Preferably, an embodiment of a screed according to the present invention comprises an accelerator to promote hydration of the cement or calcium sulphate materials or for promoting powder binder crystalline formation. Preferably the accelerator comprises at least one of lithium carbonate, sodium carbonate, an alkali earth salt, aluminium sulphate, potassium sulphate, a phosphate salt or a combination of two or more thereof. This provides the advantage that the cements and/or calcium sulphates will hydrate or set rapidly once retardation has ceased.

Preferably, an embodiment of a screed according to the present invention comprises a plasticiser. Preferably the plasticiser comprises at least one of a melamine, lignosulphonate, casein or a combination of two or more thereof which enhance the flow characteristics of the flowing floor screed without having to add excess water. Thus, reduced amounts of water can be used and/or excess water can be avoided.

Preferably, an embodiment of a screed according to the present invention comprises a liquid and/or powdered organic polymers. Preferably the liquid and/or powdered polymers comprise at least one of organic polymers, co-polymers, ter-polymers or a combination of two or more thereof which improve surface abrasion, bond strength to substrates and aggregate and or sand suspension.

In order to assist with understanding the number of components and their amounts in an embodiment of a screed according to the invention, Table 1 below shows the preferred components in tabular form wherein the components in the columns to the left are made up of the components in the column to the right. The % ranges show amount by weight.

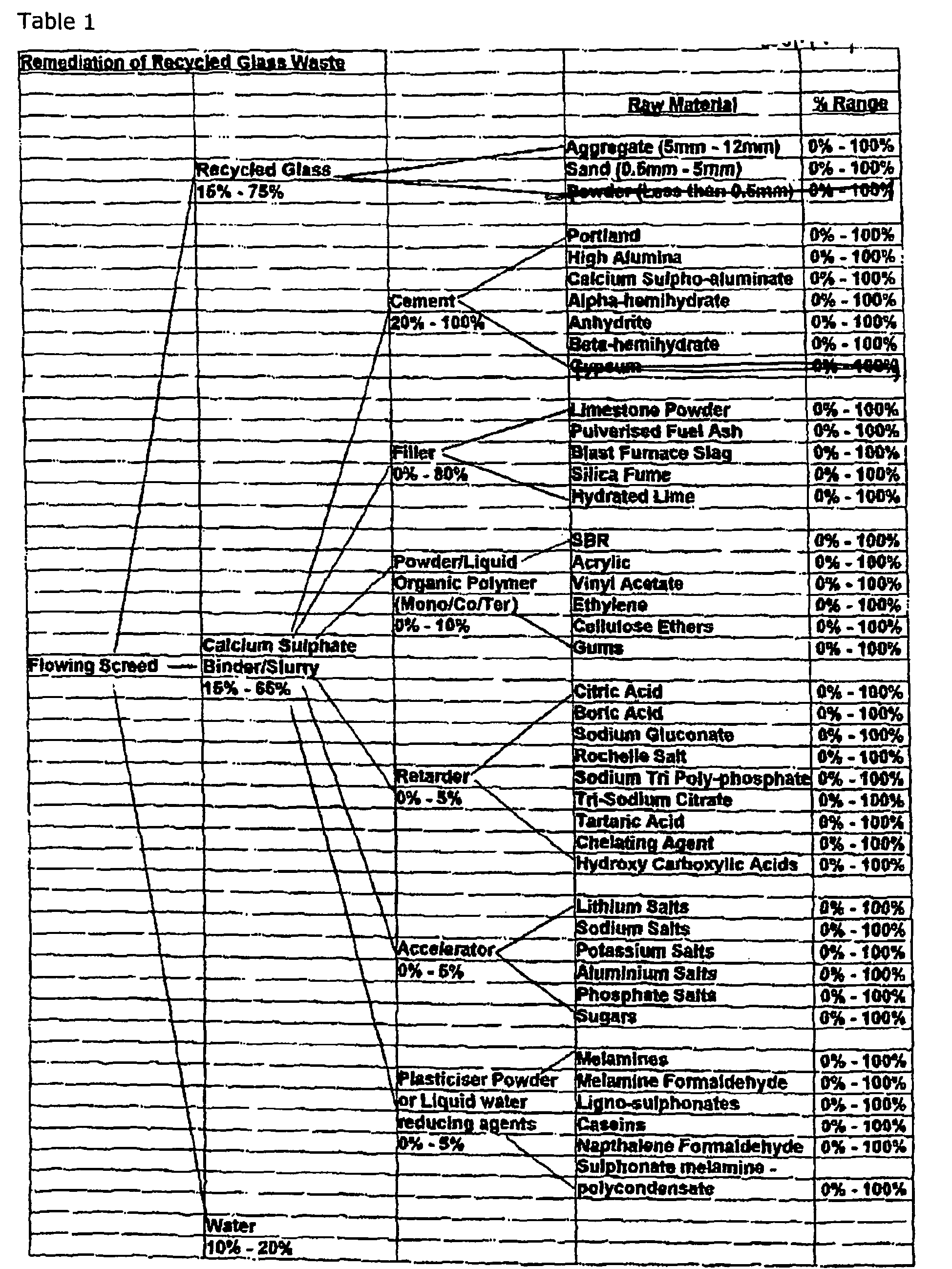

Where several components are specified as present in an amount of 0% - 100% by weight, this indicates that that component could be optionally absent or present in an amount of up to 100% by weight. Clearly, a skilled person would appreciate that at least one of the optional components must be present.

In a second aspect the invention provides a method according to claim 14.

Preferably, an embodiment of the method includes the steps of keeping the powder binder or slurry components separate from the glass sand until the screed is required and then mixing the components on site directly before applying the flowing screed to a floor substrate or of first combining the components and mixing them either on site or off site in a bulk ready-mix truck or ready-mix pump truck before applying the flowing screed to a floor substrate surface.

The recycled glass waste used in the present invention is processed by remediation of recycled glass waste which comprises the steps of crushing, washing, sieving and grading of waste glass to produce a sand residue as a component in the production of a flowing screed.

## Claims

1. Use of a composition comprising (i) 15 to 75% by weight of an aggregate of recycled glass waste or a recycled glass waste sand residue ; and (ii) 15 to 65% of a calcium sulphate binder selected form at least one of alpha hemihydrate plaster, beta hemihydrate plaster, anhydrite or a combination of two or more thereof ; and 10% to 20% by weight of water based on the weight of the screed as a flowable floor screed.

2. Use according to claim 1, wherein the binder comprises 20% to 100% by weight of a cement.

3. Use according to claim 1 or claim 2, wherein the binder comprises 0 to 80% by weight of a filler.

4. Use according to any one of claims 1 to 3, wherein the binder comprises 0 to 10% by weight of an organic polymer.

5. Use according to any one of the preceding claims, wherein the binder comprises 0 to 5% by weight of a retarder.

6. Use according to any one of the preceding claims, wherein the binder comprises 0 to 5% by weight of an accelerator.

7. Use according to any one of the preceding claims, wherein the binder comprises 0 to 5 % by weight fo a water reducing agent.

8. Use according to any one of claims 2 to 7, wherein the cement comprises, in addition to at least one of the alpha hemihydrate, the beta hemihydrate or the anhydrate, one or more of portland cement, high alumina cement and calcium sulphoaluminate cement.

9. Use according to any one of claims 3 to 8, wherein the filler is selected from one or more of limestone powder, pulverised fuel ash, blast furnace slag, silica fume and hydrated lime.

10. Use according to any one of claims 4 to 9, wherein the organic polymer is a powder or liquid selected from one or more of SBR, Acrylic, vinyl acetate, ethylene, cellulose ethers and gums.

11. Use according to any one of claims 5 to 10 wherein the retarder is selected from one or more of citric acid, boric acid, sodium gluconate, rochelle salt, sodium tri poly-phosphate, tri-sodium citrate, tartaric acid, chelating agent and hydroxy carboxylic acids.

12. Use according to any one of claims 6 to 11, wherein the accelerator is selected from one or more of lithium salts, sodium salts, potassium salts, aluminium salts, phosphate salts and sugars.

13. Use according to any one of claims 7 to 12, wherein the water reducing agent is selected from one or more of melamine, melamine formaldehyde, lingo-sulphonates, caseins, napthalene formaldehyde, sulphonate melamine polycondensate .

14. A method of screeding a floor comprising the steps of mixing the components of the compositions of any one of claim 1 to 13 in the desired amounts before applying to the floor.

15. A method according to claim 14, wherein the components are kept separate until the screed is required and then mixing the components on site directly before applying the flowing screed to a floor substrate or of first combining the components and mixing them either on site or off site in a bulk ready-mix truck before applying the flowing screed to a floor substrate or surface.

## Patentansprüche

1. Verwendung einer Zusammensetzung umfassend, (i) 15 bis 75 Gew.-% eines Aggregates aus rezykliertem Glasabfall oder eines rezyklierten Glasabfall-Sandrestes, und (ii) 15 bis 65 Gew.-% eines Calciumsulfat-Bindemittels, ausgewählt unter mindestens einem von α-Halbhydrat-Putz, β-Halbhydrat-Putz, Anhydrit oder einer Kombination von zwei oder mehreren davon, und 10 bis 20 Gew.-% Wasser, bezogen auf das Gewicht des Estrichs als ein fließfähiger Bodenestrich.

2. Verwendung nach Anspruch 1, wobei das Bindemittel 20 bis 100 Gew.-% Zement umfasst.

3. Verwendung nach Anspruch 1 oder Anspruch 2, wobei das Bindemittel 0 bis 80 Gew.-% eines Füllstoffs umfasst.

4. Verwendung nach einem der Ansprüche 1 bis 3, wobei das Bindemittel 0 bis 10 Gew.-% eines organischen Polymers umfasst.

5. Verwendung nach einem der vorstehenden Ansprüche, wobei das Bindemittel 0 bis 5 Gew.-% eines Verzögerungsmittels umfasst.

6. Verwendung nach einem der vorstehenden Ansprüche, wobei das Bindemittel 0 bis 5 Gew.-% eines Beschleunigers umfasst.

7. Verwendung nach einem der vorstehenden Ansprüche, wobei das Bindemittel 0 bis 5 Gew.-% eines Wasser-reduzierenden Mittels umfasst.

8. Verwendung nach einem der Ansprüche 2 bis 7, wobei der Zement zusätzlich zu einem oder mehreren des α-Halbhydrats, des β-Halbhydrats oder des Anhydrits einen oder mehrere von Portland-Zement, Tonerdenschmelz-Zement und Calciumsulfoaluminat-Zement umfasst.

9. Verwendung nach einem der Ansprüche 3 bis 8, wobei der Füllstoff ausgewählt ist unter einem oder mehreren von Kalksteinpulver, Flugasche, Hochofenschlacke, Kieselrauch und hydratisiertem Calciumoxid.

10. Verwendung nach einem der Ansprüche 4 bis 9, wobei das organische Polymer ein Pulver oder eine Flüssigkeit ist, ausgewählt unter einem oder mehreren von SBR, Acryl, Vinylacetat, Ethylen, Zelluloseethern und Gums.

11. Verwendung nach einem der Ansprüche 5 bis 10, wobei das Verzögerungsmittel ausgewählt ist unter einem oder mehreren von Zitronensäure, Borsäure, Natriumglukonat, Rochelle-Salz, Natriumtripolyphosphat, tri-Natriumcitrat, Weinsäure, Chelatmittel und Hydroxycarbonsäuren.

12. Verwendung nach einem der Ansprüche 6 bis 11, wobei der Beschleuniger ausgewählt ist unter einem oder mehreren von Lithium-Salzen, Natrium-Salzen, Kalium-Salzen, Aluminium-Salzen, Phosphat-Salzen und Zuckern.

13. Verwendung nach einem der Ansprüche 7 bis 12, wobei das Wasser-reduzierende Mittel ausgewählt ist unter einem oder mehreren von Melamin, Melamin-Formaldehyd, Ligno-Sulfonaten, Caseinen, Naphthalin-Formaldehyd, Sulfonat-Melamin-Polykondensat.

14. Verfahren zum Aufbringen eines Estrichs auf einen Boden, das die Schritte umfasst, Mischen der Komponenten der Zusammensetzung nach einem der Ansprüche 1 bis 13 in den gewünschten Mengen, vor Aufbringen der Zusammensetzung auf den Boden.

15. Verfahren nach Anspruch 14, wobei die Komponenten voneinander getrennt aufbewahrt werden, bis der Estrich gebraucht wird, und dann die Komponenten direkt vor Ort zusammengemischt werden, bevor der Fließestrich auf ein Bodensubstrat aufgebracht wird, oder wobei die Komponenten zuerst miteinander vereint werden und sie entweder vor Ort oder in einem Massen-Fertigmischlaster gemischt werden, bevor der Fließestrich auf ein Bodensubstrat oder eine Oberfläche aufgebracht wird.

## Revendications

1. Utilisation d'une composition comprenant (i), à concurrence de 15 à 75 % en poids, un agrégat de déchet de verre recyclé ou un résidu de sable de déchet de verrerie recyclé ; et à concurrence de 15 à 65 %, un liant à base de sulfate de calcium, à savoir au moins un membre choisi parmi le groupe comprenant du plâtre de semi-hydrate α, du plâtre de semi-hydrate β, de l'anhydrite ou encore une combinaison de deux d'entre eux ou plus ; et à concurrence de 10 à 20 % en poids, de l'eau, basés sur le poids de la chape sous la forme d'une chape de sol apte à l'écoulement.

2. Utilisation selon la revendication 1, dans laquelle le liant comprend un ciment à concurrence de 20 % à 100 % en poids.

3. Utilisation selon la revendication 1 ou 2, dans laquelle le liant comprend une matière de charge à concurrence de 0 à 80 % en poids.

4. Utilisation selon l'une quelconque des revendications 1 à 3, dans laquelle le liant comprend un polymère organique à concurrence de 0 à 10 % en poids.

5. Utilisation selon l'une quelconque des revendications précédentes, dans laquelle le liant comprend un retardateur à concurrence de 0 à 5 % en poids.

6. Utilisation selon l'une quelconque des revendications précédentes, dans laquelle le liant comprend un accélérateur à concurrence de 0 à 5 % en poids.

7. Utilisation selon l'une quelconque des revendications précédentes, dans laquelle le liant comprend un agent réduisant la teneur en eau à concurrence de 0 à 5 % en poids.

8. Utilisation selon l'une quelconque des revendications 2 à 7, dans laquelle le ciment comprend, en plus desdits un ou plusieurs membres choisis parmi le groupe comprenant le semi-hydrate α, le semi-hydrate β ou l'anhydrite, un ou plusieurs membres choisis parmi le groupe comprenant du ciment Portland, du ciment à teneur élevée en alumine et du ciment de sulfoaluminate de calcium.

9. Utilisation selon l'une quelconque des revendications 3 à 8, dans laquelle la matière de charge représente un ou plusieurs membres choisis parmi le groupe comprenant de la poudre de carbonate de calcium, des cendres volantes, du laitier, des fumées de silice et de la chaux hydratée.

10. Utilisation selon l'une quelconque des revendications 4 à 9, dans laquelle le polymère organique est une poudre ou un liquide représentant un ou plusieurs membres choisis parmi le groupe comprenant le SBR, l'acide acrylique, l'acétate de vinyle, l'éthylène, des éthers cellulosiques et des gommes.

11. Utilisation selon l'une quelconque des revendications 5 à 10, dans laquelle le retardateur représente un ou plusieurs membres choisis parmi le groupe comprenant l'acide citrique, l'acide borique, le gluconate de sodium, le sel de Rochelle, le tripolyphosphate de sodium, le citrate trisodique, l'acide tartrique, un agent de chélation et des acides hydroxycarboxyliques.

12. Utilisation selon l'une quelconque des revendications 6 à 11, dans laquelle l'accélérateur représente un ou plusieurs membres choisis parmi le groupe comprenant des sels de lithium, des sels de sodium, des sels de potassium, des sels d'aluminium, des phosphates et des sucres.

13. Utilisation selon l'une quelconque des revendications 7 à 12, dans laquelle l'agent de réduction de la teneur en eau représente un ou plusieurs membres choisis parmi le groupe comprenant la mélamine, le mélamine formaldéhyde, les lignosulfonates, les caséines, le naphtalène formaldéhyde, un polycondensat de sulfonate mélamine.

14. Procédé pour appliquer une chape sur un sol, comprenant les étapes consistant à mélanger les composants de composition selon l'une quelconque des revendications 1 à 13 dans les quantités désirées avant d'appliquer la chape sur le sol.

15. Procédé selon la revendication 14, dans lequel les composants sont maintenus à l'état séparé jusqu'à ce que la chape soit requise ; à ce moment, les composants sont mélangés sur site directement avant l'application de la chape par coulée sur un substrat de sol et/ou en combinant d'abord les composants et en les mélangeant, soit sur site, soit hors site, dans une remorque à bétonnière avant l'application de la chape par coulée sur un substrat de sol ou sur une surface.
